(19) Europäisches Patentamt
European Patent Office
Office européen des brevets

(11) **EP 3 702 809 A1**

(12) **EUROPEAN PATENT APPLICATION**

(43) Date of publication:
**02.09.2020 Bulletin 2020/36**

(21) Application number: **19159768.1**

(22) Date of filing: **27.02.2019**

(51) Int Cl.:
**G01S 17/89** (2020.01)      **G01S 17/93** (2020.01)
**G01S 7/48** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nokia Solutions and Networks Oy 02610 Espoo (FI)**

(72) Inventors:
• **STEVENS, Christoph**
  **9190 Stekene (BE)**
• **ZHAO, Hanqing**
  **1050 Ixelles (BE)**

(74) Representative: **Swindell & Pearson Limited 48 Friar Gate Derby DE1 1GY (GB)**

(54) **DEVICE NAVIGATION**

(57)    Apparatus comprising means for: receiving information indicative of an imaged scene imaged by at least one imaging device; reconstructing the scene using a spatially nonuniform sampling scheme for sampling the information, wherein the spatial nonuniformity of the sampling is controlled to bias sampling of non-sag structures in surfaces of the imaged scene; determining a navigation parameter of an at least partially autonomous navigation device in dependence on the reconstructed scene; and providing the navigation parameter to control navigation of the device.

FIG. 5A

Printed by Jouve, 75001 PARIS (FR)

(Cont. next page)

FIG. 5B

**Description**

TECHNOLOGICAL FIELD

Embodiments of the present disclosure relate to device navigation. Some relate to device navigation of a device that can navigate itself at least partially autonomously.

BACKGROUND

Devices which can navigate (e.g. steer, accelerate and/or decelerate) autonomously or partially autonomously are known. Typically, a scene local to the device will be imaged by an imaging system having at least one imaging device. The scene will comprise obstacles to be avoided. Obstacles are comprised of surfaces, and obstacle surfaces in a field of view of the imaging system will be visible in the imaged scene. The imaged scene will be analysed using algorithms that enable the device to make decisions regarding how to navigate in a manner that avoids obstacles. There exists many technical challenges in how to reliably and efficiently navigate autonomously.

BRIEF SUMMARY

According to various, but not necessarily all, embodiments there is provided apparatus comprising means for:

receiving information indicative of an imaged scene imaged by at least one imaging device;
reconstructing the scene using a spatially non-uniform sampling scheme for sampling the information, wherein the spatial non-uniformity of the sampling is controlled to bias sampling of non-sag structures in surfaces of the imaged scene;
determining a navigation parameter of an at least partially autonomous navigation device in dependence on the reconstructed scene; and
providing the navigation parameter to control navigation of the device.

In some, but not necessarily all examples, the sampling is dependent on distances of surface locations from a reference location associated with the device.
In some, but not necessarily all examples, the sampling is dependent on comparison of relative distances of different surface locations from the reference location.
In some, but not necessarily all examples, the bias samples surface locations closer to the reference location than other surface locations.
In some, but not necessarily all examples, the sampling is dependent on distances of surface locations within a spatial precision unit.
In some, but not necessarily all examples, the sampling is dependent on comparison of distances of different surface locations, within the spatial precision unit.
In some, but not necessarily all examples, the sampling is repeated for a plurality of spatial precision units.
In some, but not necessarily all examples, spatial precision units have precisions defined as spatial extents, and wherein the spatial extents of the spatial precision units are non-uniform.
In some, but not necessarily all examples, the spatial extents of spatial precision units are determined in dependence on at least one of:

distances of surfaces from the device; or
surface complexity of surfaces.

In some, but not necessarily all examples, the navigation parameter comprises direction.
In some, but not necessarily all examples, the sampling scheme is configured to determine which locations along the surfaces are to be assigned a tensor in a tensor field.
In some, but not necessarily all examples, the navigation parameter is determined in dependence on a cost function configured to reduce the weighting of distant sampled surface locations from the device, on the determination of the navigation parameter, and/or wherein the navigation parameter is determined in dependence on a reward function configured to increase a reward when the device is close to a surface.
According to various, but not necessarily all, embodiments there is provided a device configured for at least partially autonomous navigation, which is the at least partially autonomous navigation device of any preceding claim, and comprises the apparatus of any preceding claim.
According to various, but not necessarily all, embodiments there is provided a method comprising:

receiving information indicative of an imaged scene imaged by at least one imaging device;

reconstructing the scene using a spatially non-uniform sampling scheme for sampling the information, wherein the spatial non-uniformity of the sampling is controlled to bias sampling of non-sag structures in surfaces of the imaged scene;

determining a navigation parameter of an at least partially autonomous navigation device in dependence on the reconstructed scene; and

providing the navigation parameter to control navigation of the device.

According to various, but not necessarily all, embodiments there is provided a computer program comprising instructions that when run on a processor enables the processor to:

cause receiving information indicative of an imaged scene imaged by at least one imaging device;

cause reconstructing the scene using a spatially non-uniform sampling scheme for sampling the information, wherein the spatial non-uniformity of the sampling is controlled to bias sampling of non-sag structures in surfaces of the imaged scene;

cause determining a navigation parameter of an at least partially autonomous navigation device in dependence on the reconstructed scene; and

cause providing the navigation parameter to control navigation of the device.

According to various, but not necessarily all, embodiments there is provided apparatus comprising means for: receiving information indicative of an imaged scene imaged by at least one imaging device; and reconstructing the scene, wherein the reconstruction is controlled to bias sampling of non-sag structures in surfaces of the imaged scene. According to various, but not necessarily all, embodiments there is provided apparatus comprising means for: receiving information indicative of an imaged scene imaged by at least one imaging device; and reconstructing the scene using a spatially non-uniform sampling scheme.

According to various, but not necessarily all, embodiments there is provided examples as claimed in the appended claims.

BRIEF DESCRIPTION

Some example embodiments will now be described with reference to the accompanying drawings in which:

FIG 1 illustrates an example of a method;
FIG 2 illustrates an example of a surface with a sag structure;
FIG 3 illustrates an example of a method;
FIGS. 4A to 4D illustrate, respectively, examples of a scene, an imaged scene, a sampled scene, and a reconstructed scene;
FIG 5A illustrates a plan view of an example scene, showing the impact of a sag structure on a navigation parameter for a device without use of a spatially non-uniform sampling scheme, and FIG 5B illustrates the plan view, showing a reduced impact of the sag structure on the navigation parameter due to use of a spatially non-uniform sampling scheme;
FIG 6 illustrates a plan view of an example scene, and sampled surface locations, sampled according to a spatially non-uniform sampling scheme;
FIG 7A illustrates a plan view of an example scene, showing the impact of a sag structure on a projected path of a device without use of a spatially non-uniform sampling scheme, and FIG 7B illustrates the plan view, showing an improved projected path due to use of a spatially non-uniform sampling scheme;
FIG 8A illustrates a plan view of an example scene, showing the impact of object edge attraction on a projected path of a device without use of a spatially non-uniform sampling scheme, and FIG 8B illustrates the plan view, showing an improved projected path due to use of a spatially non-uniform sampling scheme;
FIG 9A illustrates an example of apparatus, and FIG 9B illustrates an example of a non-transitory computer-readable storage medium;
FIG 10 illustrates an example of an at least partially autonomous navigation device; and
FIG 11 illustrates an example of a method.

DETAILED DESCRIPTION

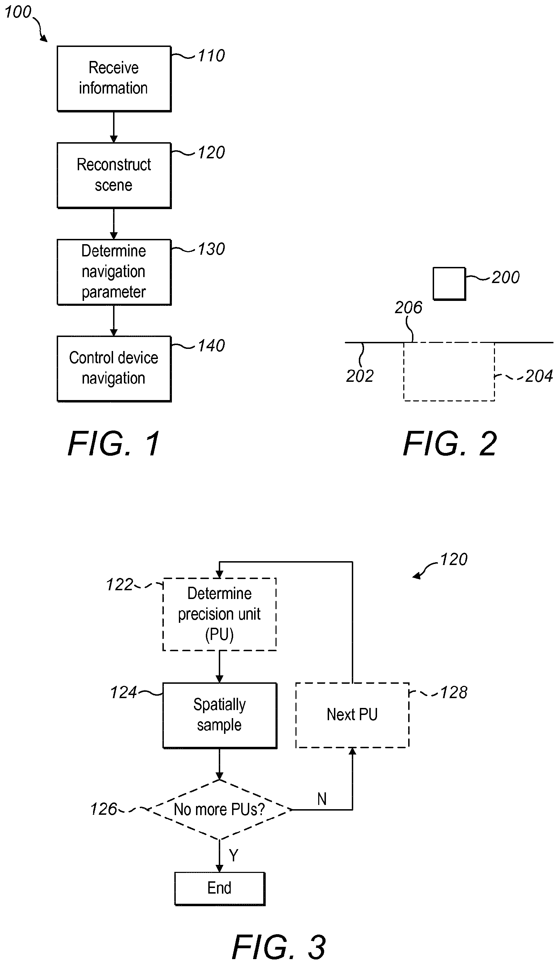

FIG 1 illustrates an example of a method 100 that provides a navigation parameter to control navigation of an at least partially autonomous navigation device.

At block 110, the method 100 comprises receiving information indicative of an imaged scene imaged by at least one imaging device 200. At block 120, the method 100 comprises reconstructing the scene using a spatially non-uniform sampling scheme for sampling the information, wherein the spatial non-uniformity of the sampling is controlled to bias sampling of non-sag structures in surfaces of the imaged scene. At block 130, the method 100 comprises determining a navigation parameter of an at least partially autonomous navigation device in dependence on the reconstructed scene. At block 140, the method 100 comprises providing the navigation parameter to control navigation of the device.

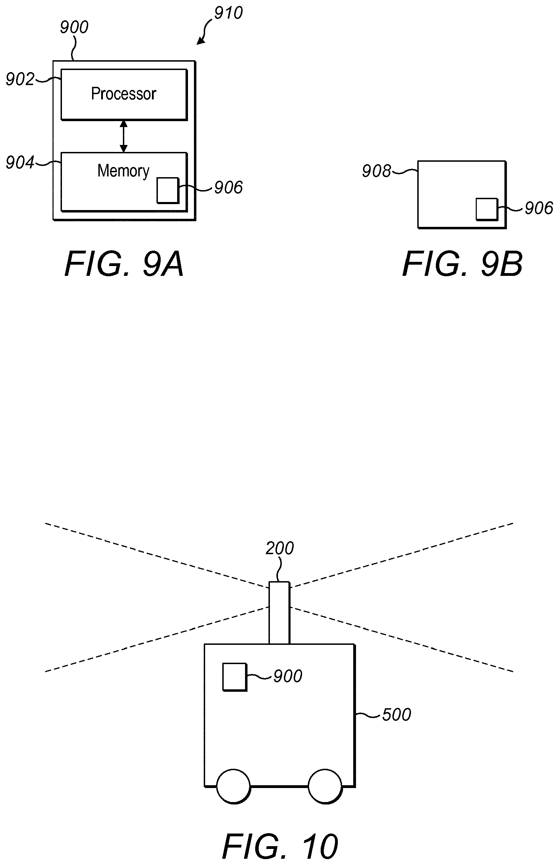

An example of an at least partially autonomous navigation device 500 ('device' herein) is shown in FIG 10. The device 500 may be only capable of autonomous navigation. Alternatively, the device 500 may comprise a manual mode and a mode of autonomous navigation. A further example is a device 500 which can provide autonomous navigation assistance while being manually operated. In various examples, the mode of navigation which can be controlled autonomously may comprise direction, speed, acceleration, braking, or a combination thereof.

The method 100 will be explained in more detail, with reference to the other Figures. Block 110 comprises receiving the information indicative of the imaged scene imaged by the at least one imaging device 200.

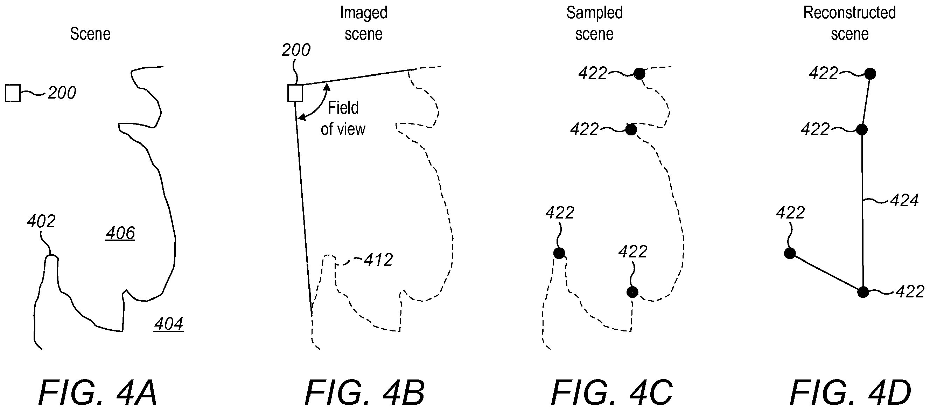

The scene is the detectable place in which the device 500 is located, while in use. The scene may be local to the device 500, and may be initially unfamiliar to the device 500. FIG 4A shows a plan view of an example scene. The plan view comprises the imaging device 200, an obstacle 404 and a navigable area 406. The obstacle 404 has a detectable surface 402, represented by the contour in FIG 4A. The imaging device 200 may be on-board the autonomous navigation device 500 or may be off-board.

The imaged scene is an image-representation of the scene. The representation may be digital, for example comprising pixels, voxels and/or metadata. The representation may comprise a depth (D) map, colour (RGB, CMYK) data, light-field data, monochromatic data, or a combination thereof such as RGB-D data. FIG 4B shows how the scene of FIG 4A might look as an imaged scene, wherein the surface 402 is indicated by the received information 412 in pixelated form.

The at least one imaging device 200 comprises any suitable image sensor(s) capable of imaging (capturing) images of the scene that can be used for scene reconstruction. The image sensor may be configured to detect light or other electromagnetic radiation. Visual light camera sensing is a particularly cost-effective sensing mode, due to the low cost of charge-coupled devices (CCDs) and complementary metal oxide semiconductors (CMOSs). Visual light cameras can be configured to produce depth map data to facilitate scene reconstruction, for example by being deployed in a stereo configuration. Plenoptic cameras can be configured to produce light-field data to facilitate scene reconstruction, for example by being deployed in a stereo configuration. Other suitable sensors include, but are not limited to, light detection and ranging (Lidar) sensors and radio detection and ranging (Radar) sensors.

The field of view of the imaging device 200 or the collective field of view of an array of imaging devices may be 360 degrees, or another value greater than a reasonable lower bound of approximately 30 degrees. In some examples, the collective field of view of an array of imaging devices may be greater than 360 degrees. In other examples, distributed imaging devices may collaborate via node-to-node communication to enable collaborative navigation within a scene. The imaged scene only indicates the parts of the scene within the (angular) field of view of the imaging device(s) 200.

Block 110 refers to receiving 'information' indicative of the imaged scene. In one example, the information is indicative of the imaged scene because the information comprises the above raw representation, received from the imaging device 200. In another example, the information is indicative of the imaged scene because the information comprises an initially reconstructed representation of at least topological information about the scene, received from a processor. Topological information may comprise a point cloud, contour map or another equivalent, or a solid model comprising mesh data, cell data, boundary data or another equivalent. In some, but not necessarily all examples, the method 100 comprises performing the above initial reconstruction on the received information.

Block 120 is explained in more detail. Block 120 comprises reconstructing the scene using the spatially non-uniform sampling scheme.

Scene reconstruction relates to processing the information to capture sufficient information about the shape and appearance of surfaces in the scene to enable accurate navigation decisions to be made, avoiding any obstacles. The scene reconstruction at block 120 is for the purpose of determining the navigation parameter, and therefore a high level of spatial detail is not necessarily required. In fact, less detail reduces processor load, to enable navigation on the fly. In some examples, the scene reconstruction is at a high level of spatial detail. In some examples, the scene reconstruction is performed iteratively by continual repetition of the method 100, resulting in an iteratively increasing level of spatial detail. In some examples, the scene reconstruction may also be used for additional purposes such as mapping or surveying. The scene reconstruction may be permanently stored for later use on the apparatus or in remote storage.

Scene reconstruction and/or one or more other blocks of the methods described herein may be performed on-board the device 500, off-board the device 500, or both on-board and off-board, via apparatus-to-infrastructure communication. In some examples, high-spatial detail scene reconstruction could be performed off-board, in a server not constrained by processing power or electrical battery power, to determine the navigation parameter accurately. Low-spatial detail scene reconstruction could be concurrently performed on-board, to predict the navigation parameter less accurately but with a lower latency and power load. The off-board navigation parameter could correct the on-board navigation parameter. The off-board processing could be carried out at a server(s) representing an edge layer or cloud layer. The communication may be via a low latency wireless connection, for instance using the 5th generation telecommunication protocol that has attributes such as use of frequencies greater than 3Ghz, use of bandwidths greater than 20MHz, and use of orthogonal frequency division multiplexing. Alternatively, communication could use a higher-latency telecommunications protocol of a predecessor generation, or any other known communications protocol.

Scene reconstruction requires sampling of surface locations indicated by the information. Surface locations are locations on the surfaces of obstacles. Sampling refers to measuring a particular parameter associated with the particular scene reconstruction technique being employed. For example, if tensor field-based reconstruction is employed, the sample may calculate an eigenvector of a symmetric tensor at the sampled surface location.

The sampling scheme is configured to sample surface locations at certain sampling intervals. The sampling intervals may be spatial sampling intervals. The sampling intervals may represent circular sector-like angular sampling intervals, because the information has an associated (angular) field of view.

The sampling scheme is spatially non-uniform. Spatial non-uniformity means that the sampling interval of the sampling itself may be variable throughout an angular sweep of the sampling across the field of view. Therefore, the sampled surface locations are not equispaced. The particular choice of which surface locations to sample can significantly affect the value of the navigation parameter determined at block 130, especially if a computationally efficient low-detail sampling technique is employed.

The spatial non-uniformity of the sampling is controlled in a particular way, to bias sampling of non-sag structures in surfaces of the imaged scene, in other words biasing sampling of non-sagging surfaces. This means that fewer or no samples are taken at surface topological features that are sagging. A sag structure in a two-dimensional contour of a surface refers to the part of the surface contour that exists between neighbouring crests (peaks) of the surface contour. A sag structure therefore comprises a trough between the crests, and sagging walls between the trough and each crest. Sag structures can of course be three-dimensional.

Biasing sampling of non-sag structures enables relatively more samples to be taken of surface topological features that are peaks or rising surfaces, while maintaining the same average sampling resolution. The bias may therefore increase sampling of surface locations closer to a reference location such as the location of the device 500 itself, than other surface locations.

Therefore, the bias is configured to increase the chance of a surface location being sampled, the further uphill (closer to the reference location) the surface location is relative to surrounding surface locations. The method 100 may comprise sampling the highest point on the surface within an area of the surface being considered.

The result of using the spatially non-uniform sampling scheme is that when the scene is reconstructed, the reconstructed surface will appear less saggy for the purpose of calculating the navigation parameter. FIG 2 shows an example use case, wherein the imaging device 200 captures image data showing a surface with a non-sag structure 202 and a sag-structure comprising a sagging wall 204. The putative surface 206 of the scene reconstruction will smooth out sag structures. FIG 4C and FIG 4D show a further example, wherein samples are taken at peaks of the surface 402 of FIG 4A and FIG 4B, that are closer to the reference location than surrounding surface locations. The sample positions are represented by icons 422. The reconstructed scene of FIG 4D comprises a putative surface 424 between the sampled locations, which is smoother and which smooths out sag structures.

The spatially non-uniform sampling scheme could be implemented in various ways, In some examples, the sampling is dependent on distances of surface locations from the reference location. The method 100 may therefore comprise determining the distances of the surface locations, which can be done using computationally efficient methods such as ray casting. This enables the effect of non-sag structures to be detected, for example by comparison of relative distances of different surface locations from the reference location. The bias increases sampling of closer surface locations.

FIG 3 shows an example subroutine of block 120, according to some, but not necessarily all examples. At block 124, the subroutine 120 comprises sampling the information using the spatially non-uniform sampling scheme. Optional blocks 122, 126 and 128 comprise performing the sampling within a predetermined average spatial resolution constraint. The constraint is configured to control spatial resolution and ensures that the samples do not all cluster in a localised section of the overall field of view of the information. In FIG 3, but not necessarily all examples, the sampling is constrained to occur within spatial precision units.

The use of spatial precision units will now be explained. A spatial precision unit has a spatial extent, corresponding to a predetermined angular width and/or height within the field of view of the information. The average spatial extent of a spatial precision unit is defined by the average size of a sampling interval. For example, if the information provides an entire field of view of 360 degrees, and the sampling scheme divides the entire field of view into 36 spatial precision units, then the sampling interval is 10 degrees, on average, and each spatial precision unit has a spatial extent of 10 degrees, on average.

The sampling scheme may be configured to limit the number of samples or variance of sampled values within each spatial precision unit. For example, only one sampled value at one surface location within a spatial precision unit may be taken as a global value representing the entire spatial precision unit, even if other surface locations within that spatial precision unit would yield different values if sampled. This enables a small set of values to be determined, corresponding to the number of spatial precision units in the field of view. Therefore, spatial precision units advantageously enable efficient sampling of the whole scene, reducing computational burden to enable navigation on the fly. This is more efficient than techniques which do not constrain the average sampling resolution to below the maximum possible sampling resolution, which may generate excessive samples.

In some, but not necessarily all examples, the spatial extent of a spatial precision unit is the spatial extent of the entire field of view, divided by a value from the range more than two, to approximately one thousand. This range provides a good compromise between resolution accuracy and computational cost. A narrower optimal range is from ten to one hundred.

Block 122 comprises determining a current spatial precision unit (PU). Block 124 comprises performing the sampling within the current spatial precision unit. As mentioned above, the bias may increase sampling of closer surface locations within spatial precision units. In a specific example, the surface location within a spatial precision unit which is closest to the reference location is sampled. Block 126 checks whether there are no more spatial precision units need to be sampled. If more spatial precision units are to be sampled, the subroutine 120 loops back to block 122. Otherwise, the subroutine 120 terminates and reverts to the method 100 of FIG 1.

The spatial extents of different spatial precision units may be the same or may vary. The spatial extents of spatial precision units may be dependent on distances of surfaces and/or surface complexity of surfaces. For example, the spatial extent of precision units may be reduced for surfaces close to the reference location, to enable nearby surfaces to be reconstructed in greater detail. Likewise, more complex surfaces could be reconstructed in greater detail.

At block 130, the method 100 comprises determining the navigation parameter of the device 500 in dependence on the reconstructed scene.

The navigation parameter is configured to influence the control of one or more actuators of the device 500. The navigation parameter may comprise direction. Examples of actuators for controlling direction include a steering actuator, a roll, pitch or yaw actuator, or a combination thereof. Additionally, or alternatively, the navigation parameter may comprise speed, positive torque (acceleration), negative torque (braking), or any other parameter that controls movement of at least part of the device 500.

The navigation parameter is determined in dependence on the reconstructed scene as determined using the sampling scheme. In some examples, multiple constraints on the navigation parameter may exist. For example, cost functions and/or value functions may be used to determine an ideal path, while minimizing a parameter such as inefficiency, distance travelled, or time taken. In some, but not necessarily all examples, a collision avoidance constraint may stop the device 500 and/or force a change of navigation parameter when an obstacle 404 is detected that satisfies a collision avoidance condition, such as being within a threshold distance of the device 500.

Block 140 is explained in more detail. At block 140, the method 100 comprises providing the navigation parameter to control navigation of the device 500.

If the apparatus (e.g. apparatus 910 of FIG 9A) performing the method 100 is on-board the device 500, providing the navigation parameter at block 140 may simply require transmitting the navigation parameter to the actuator, via any appropriate communication bus or medium. If the apparatus is off-board the device 500, the providing may comprise transmitting the navigation parameter wirelessly (or via wired connection) to a receiver or other input means of the device 500, to cause the device 500 to control its navigation in response to receiving the navigation parameter.

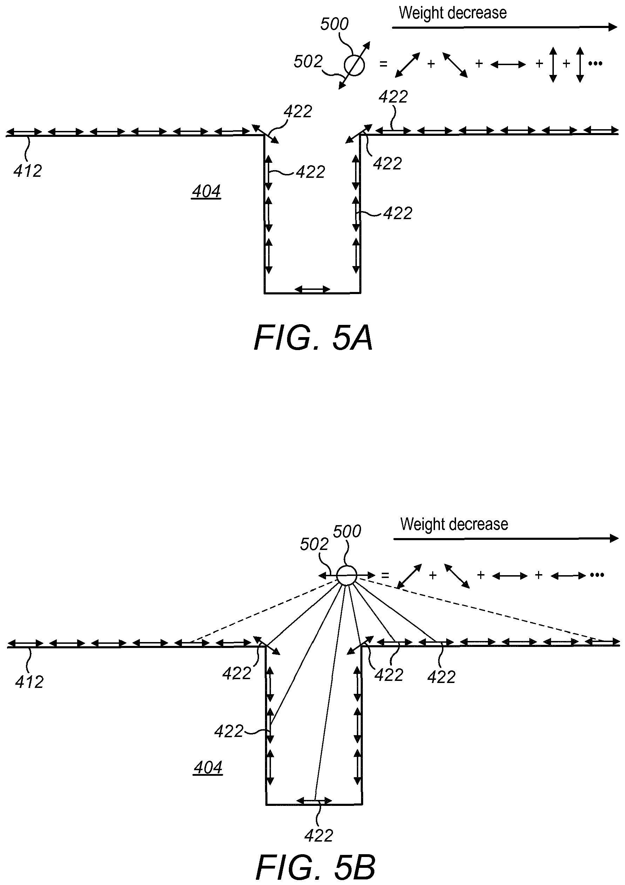

In various examples, the result of implementing the spatially non-uniform sampling scheme is that the device 500 will be more capable of avoiding sag structures, and may maintain a greater separation from nearby surfaces compared to approaches that use a spatially uniform sampling scheme. A comparative example is shown in FIG 5A and FIG 5B.

FIG 5A illustrates a plan view of an example scene, showing the impact of a sag structure of a surface on the planned direction of the device 500, without use of the spatially non-uniform sampling scheme.

In some, but not necessarily all examples, the navigation parameter of the device 500 is determined using a tensor field-based navigation scheme, as shown by symbols in FIG 5A. In some, but not necessarily all examples, the navigation parameter of the device 500 is direction, as shown by a symbol in FIG 5A.

Tensor field-based navigation has advantages including smoothness and improved scene reconstruction, compared to other navigation techniques. Tensor field-based navigation provides the ability to generate a locally smooth path, as well as a globally efficient path routing within a partially reconstructed scene. As tensors are bidirectional, tensor field-based navigation advantageously avoids the vector orientation problem in vector combination associated with alternative vector field-based navigation techniques that determine tangent vectors at surfaces. Since tangent vectors are directional, the tangent vectors can unintentionally cancel each other out when summed as part of a determination of the navigation parameter.

According to the tensor-field based navigation scheme, tensors are calculated for positions along the surface of the obstacle 404, at uniform sampling intervals. The position indicated by each tensor is illustrated in FIG 5A by an icon 422 in the form of an bidirectional arrow that points in the direction of the eigenvector of the tensor. The major eigenvector direction of each tensor equals the tangent line of the sampled surface location. Each tensor along the surface is calculated as a combination of all the tensors along the surface. The tensor field defines a reconstructed scene.

In other examples of the disclosure, the icons 422 may correspond to other parameters, usable by other navigation schemes than tensor field-based navigation.

The optimal direction of the device 500 is determined as a globally combined tensor 502 corresponding to the combination of all tensors along surfaces. The globally combined tensor 502 may be calculated using a cost function that reduces the weighting of tensors proportionally to increasing tensor distance from a known reference location, in this case the location of the device 500.

FIG 5A illustrates a difficulty with tensor field-based navigation. Due to the close proximity of the device 500 to the sag structure, the globally combined tensor 502 dictating the direction of the device 500 heavily follows the direction of tensors inside the sag structure. Due to the high density of sagging-direction tensors inside the sag structure (appearing vertical in FIG 5A), the globally combined tensor 502 points towards the sag structure, and the device 500 is guided even closer towards the sag structure. This can cause the device 500 to become stuck or to inefficiently have to reverse out of a sag structure.

FIG 5B illustrates the same surface and device 500 as FIG 5A, the difference being that a spatially non-uniform sampling scheme is used. A reduced impact of the sag structure on the direction is clearly visible. The tensors on the surface in FIG 5A are also shown in FIG 5B. The tensors which are sampled using the spatially non-uniform sampling scheme are labelled with icons 422 that are intersected by visible lines radiating outwards from the device 500, for illustrative purposes. The different angular separation of the lines relative to each other, is due to the spatial non-uniformity of the sampling scheme.

Tensors in a sagging direction (e.g. appearing vertical in FIG 5B) are underrepresented or under-sampled, as a result of the bias applied to the spatially non-uniform sampling scheme. Only one out of the six illustrated sagging tensors (vertical in FIG 5B) is sampled. Therefore, tensors in a sagging direction have a reduced weight and/or no weight in the cost function that determines the globally combined tensor 502 (e.g. direction). The direction of FIG 5B is therefore in a more tangential direction to the surface, compared to the direction of FIG 5A which points into the sag structure. Therefore, in FIG 5B the device 500 is less attracted to the sag structure and maintains a greater distance from the surface of the obstacle 404.

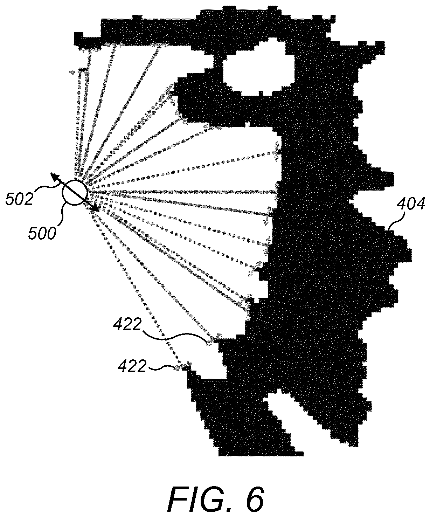

FIG 6 shows another example similar to FIG 5B, wherein the device 500 is passing another obstacle 404. The surface locations represented by tensors are illustrated with icons 422, intersected by lines radiating from the device 500. The markers reside on local peaks of the surface, representing the closest points to the device 500 within respective spatial precision units. In FIG 6, but not necessarily in all examples, the width of each spatial precision unit is w=10 degrees. As indicated by illustrative lines extending from the device 500 to the tensors, the tensors are separated by ten degrees on average, but exhibit considerable variance within the range $w-(w/2)<w\leq w+(w/2)$ due to the control of the spatial non-uniformity of the sampling scheme. For w=10, the range is 5 degrees to 14.99 degrees.

In FIG 6, the reconstructed scene is defined by the tensors which reside on local peaks of the obstacle surface, and illustrated with samples 422. Therefore, the sag structures between the sampled peaks in the surface are advantageously less smoothed out in the process of reconstructing the scene, and have less of an impact on the determined direction of the device 500.

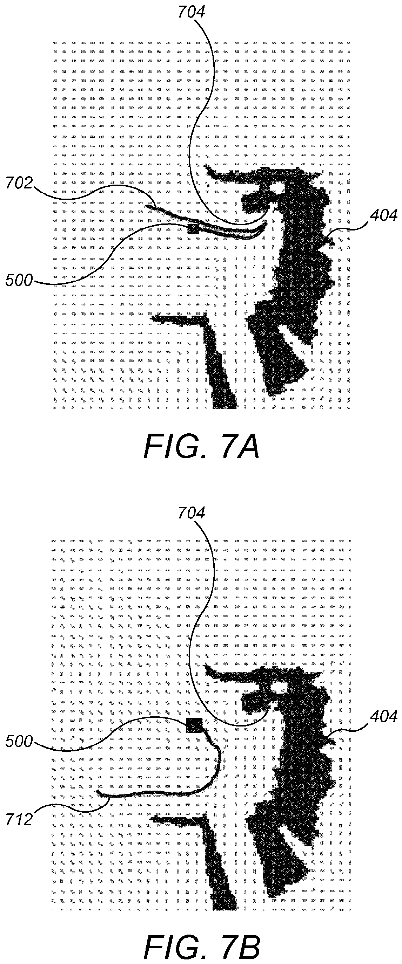

FIG 7A illustrates the result of a simulation of the projected path 702 of the device 500 in a scene comprising the obstacle 404 of FIG 6. Tensorfield-based navigation is used, with spatially uniform sampling. The obstacle 404 comprises a deep sag structure 704. As shown by the projected path 702, the device 500 is initially attracted to the sag structure 704, which leads the device 500 to run into the sag structure 704. The path 702 of the device 500 is then inversed when the device 500 is about to collide with the obstacle 404, causing a collision avoidance condition to be satisfied.

FIG 7B illustrates a result of a simulation, wherein the difference compared to FIG 7A is that a spatially non-uniform sampling scheme is used. The new projected path 712 is not attracted to the sag structure 704.

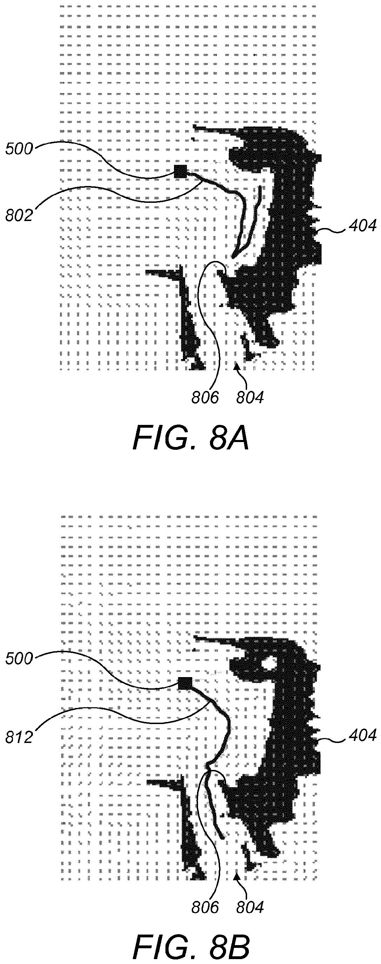

FIG 8A illustrates a result of a simulation wherein the obstacle 404 is slightly different from FIG 7A. The starting conditions are otherwise similar to FIG 7A.. The intention is for the device 500 to entire a narrow channel 804. The projected path 802 reveals that the device 500 is attracted to the surface of the obstacle 404, and therefore travels close to the surface of the obstacle 404 as it approaches the channel 804. A surface protrusion 806 at the channel entrance occludes the view of the channel 804. This causes the device 500 to lose line of sight to the channel 804. The device 500 reverses its direction to avoid a collision with the surface protrusion 806, causing the device 500 to travel away from the channel 804. Overall, the device 500 fails to enter the channel 804 due to the obstacle-surface attraction, which causes poor visibility of the channel 804.

FIG 8B illustrates a result of a simulation, wherein the difference compared to FIG 8A is that a spatially non-uniform sampling scheme is used. The new projected path 812 keeps the device 500 far from the obstacle 404, so that a line of sight is maintained to the channel 804, and the device 500 successfully enters the channel 804.

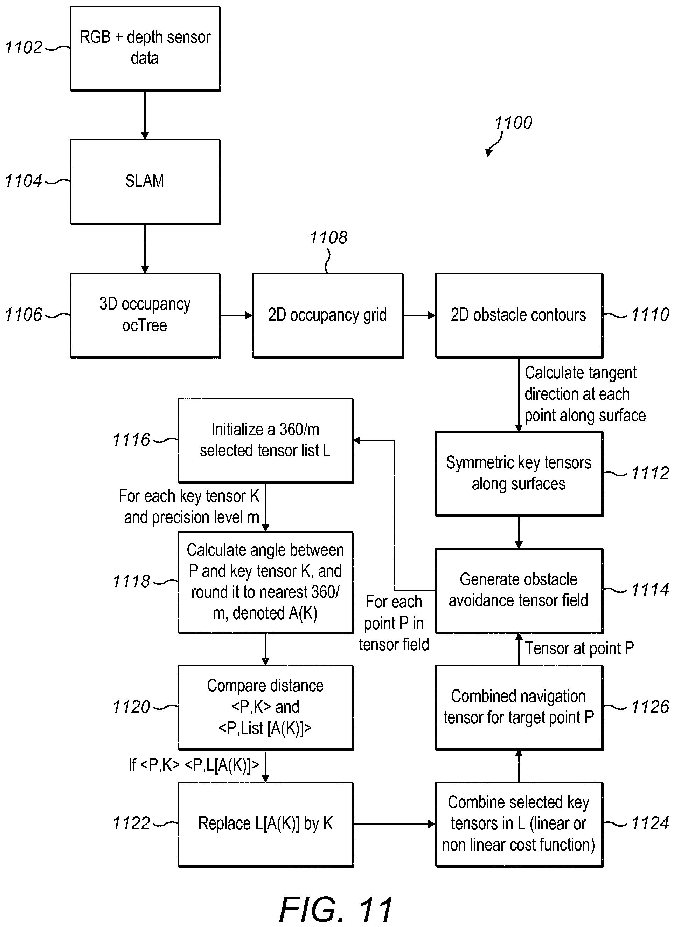

FIG 11 illustrates a method 1100 according to various, but not necessarily all examples of the disclosure, wherein tensor field-based navigation is performed.

Block 1102 of FIG 11 is a potential implementation of block 110 of FIG 1. At block 1102, the method 1100 comprises receiving the information indicative of the imaged scene. In some, but not necessarily in all examples, the information comprises depth data. If visual light camera sensing is used due to its cost benefits, the information may comprise RGB-D data, for example.

At block 1104, the method 1100 comprises localizing the device 500. The method 1100 may further comprise commencing initial scene reconstruction to map the scene. In block 1104, but not necessarily all examples, the method 1100 performs both simultaneously, using a simultaneous localization and mapping (SLAM) technique, which is accurate and efficient for navigation in unknown environments. The initial scene reconstruction may comprise determining a point cloud, depending on the SLAM technique that is used.

Blocks 1106 and 1108 illustrate an example of further steps of a SLAM technique that could be used. At block 1106, the three-dimensional space represented by the information is decomposed into a coarse data structure. In some, but not necessarily all examples, the data structure comprises octrees. At block 1108, the octree grid is converted into a 2D or near-2D occupancy grid of the ground plane. This further improves computational efficiency, if accurate data above or below the movement plane is not needed for navigation, e.g. for ground-based autonomous navigation.

At block 1110, obstacle contours are calculated for the grid of block 1108, so that the surfaces of the obstacles are mapped.

At block 1112, the tangent direction at each point along the obstacle surface may be calculated, resulting in determination of symmetric tensors along the surfaces (='key tensors' $T_k$) as described in relation to FIG 5A and FIG 5B. For a tensor field-based navigation scheme, a symmetric tensor $T_k(p_i)$ can be calculated on all or a subset of points $p_i$ on an obstacle surface $p_i \in \mathbb{C}$. Its major eigenvalue is parallel with the tangent line of the obstacle surface at that point. The symmetric tensor can be decomposed into an isotropic part $S_i$ and an anisotropic part $A_i$:

$$T_k(p_i) = S_i + A_i = \lambda \begin{pmatrix} 1 & 0 \\ 0 & 1 \end{pmatrix} + \mu_i \begin{pmatrix} \cos 2\theta_i & \sin 2\theta_i \\ \sin 2\theta_i & -\cos 2\theta_i \end{pmatrix}$$

where $\lambda$ and $\mu_1$, are weights associated with the two parts respectively, and can be calculated as follows:

$$\lambda \begin{pmatrix} 1 & 0 \\ 0 & 1 \end{pmatrix} = \frac{1}{2} \left( T_k(p_i) + T_k(p_i)^T \right)$$

$$\mu_i \begin{pmatrix} \cos 2\theta_i & \sin 2\theta_i \\ \sin 2\theta_i & -\cos 2\theta_i \end{pmatrix} = \frac{1}{2} \left( T_k(p_i) - T_k(p_i)^T \right)$$

in which $T_k(p_i)^T$ is the transpose of tensor $T_k(p_i)$.

The tensor field may have an even density of tensors at all the obstacle surfaces. Alternatively, the tensor field may have an uneven density of tensors on the obstacle surfaces. In some examples, one or more of the methods described herein could be configured to determine one or more objects or regions of interest in the imaged scene. The tensor density on at least the obstacle surfaces may be dependent on the determined objects or regions of interest. For example, the tensor density may be increased within objects or regions of interest, to enable a more fine-grained navigation in certain use cases. The tensor density may be controlled by spatially varying the block sizes in the coarse data structure, or by any other suitable method. The object or region of interest may be automatically detected, based on criteria detected from the image data or other sensor data such as: detected illumination; detected surface complexity; detected external object motion; detected number of obstacles; detected obstacle size; a detected direction of the device 500; or object recognition. Alternatively, the object or region of interest may be manually selected.

After block 1112, further scene reconstruction tasks are performed including sampling tensors of the tensor field, for determining the navigation parameter. If an inferior spatially uniform sampling scheme were to be used, the anisotropic part of all of the tensors on obstacle surfaces could be combined to determine the globally combined tensor 502 $T(p_i)$ (e.g. direction), as follows:

$$T(p_i) = \sum_{p_j \in \mathbb{C}} (T_k(p_j) - S_i)W(p_i, p_j) = \sum_{p_j \in \mathbb{C}} \mu_i \begin{pmatrix} \cos 2\theta_i & \sin 2\theta_i \\ \sin 2\theta_i & -\cos 2\theta_i \end{pmatrix} W(p_i, p_j)$$

where $W(p_i, p_j)$ is an implementation of the cost function shown in FIG 5A, that reduces weighting of tensors as their distance increases. The cost function could be linear, higher-order, an exponential Gaussian core form, or another type. Examples of linear, high-order and exponential Gaussian core form cost functions are shown below in order:

$$W(p_i, p_j) = \frac{1}{\|p_i - p_j\|}$$

$$W(p_i, p_j) = \frac{1}{\|p_i - p_j\|^{\frac{3}{2}}}$$

$$W(p_i, p_j) = e^{-\frac{\|p_i - p_j\|^2}{\sigma^2}}$$

However, the method 1100 proceeds to blocks 1114 to 1126 which include use of the spatially non-uniform sampling scheme described herein.

Block 1114 comprises commencing a loop which loops for each point P in the tensor field, to iteratively calculate the navigation parameter.

At block 1116, a tensor list L for containing the sampled tensors for determination of the navigation parameter is calculated. In some, but not necessarily all examples, the tensor list L is initially empty or contains placeholder values such as the tensors calculated at block 1112. The aim is for each spatial precision unit to be represented by the tensor list L and for each spatial precision unit to be represented by a single value of a tensor and not multiple values, in the tensor list L. Each of the one or more entries in the tensor list L that corresponds to a particular spatial precision unit, will contain the same value when the method 1100 is concluded.

At block 1118, the angle between a reference angle (e.g. North, or current device direction) and each tensor is calculated and rounded to the nearest spatial precision unit to which the tensor belongs.

At block 1120, the distance of each tensor from the reference location (e.g. device position) is compared to the distances of the other tensors within the same spatial precision unit, from the reference location. In this example, a shortest distance criterion is used. When the shortest distance is found, block 1122 replaces one or more tensor values in the tensor list L corresponding to that spatial precision unit, with the new tensor value.

Using mathematical notation, instead of combining all tensors on obstacle surfaces across the entire space $p_j \in \mathbb{C}$ (spatially uniform sampling scheme), the spatially non-uniform sampling scheme combines a relatively small number of tensors in the set $\mathbb{M}(p_i) \subseteq \mathbb{C}$ for a location of the device 500 $p_i$:

$$T(p_i) = \sum_{p_j \in \mathbb{M}(p_i)} (T_k(p_j) - S_i)W(p_i, p_j) = \sum_{p_j \in \mathbb{M}(p_i)} \mu_i \begin{pmatrix} \cos 2\theta_i & \sin 2\theta_i \\ \sin 2\theta_i & -\cos 2\theta_i \end{pmatrix} W(p_i, p_j)$$

where the small set of tensors $\mathbb{M}(p_i)$ is selected according to the spatially non-uniform sampling scheme, to define a reconstructed scene comprising the set $\mathbb{M}(p_i)$. The set $\mathbb{M}(p_i)$ can be calculated according to:

$$\mathbb{M}(p_i) = \{p_k | p_k \in \mathbb{C} \wedge \|p_i - p_k\| \leq \|p_i - p_t\|, \forall p_t \in \mathbb{S}(p_i, p_k)\}$$

where the set $\mathbb{S}(p_i, p_k)$ for each point $p_k$ in the set of points on the obstacle surface $\mathbb{C}$ , given the location of the device 500 $p_i$, is the set of all the points in $\mathbb{C}$ other than $p_k$ and belongs to the same spatial precision unit of $p_k$ given the device location $p_i$, that is:

$$\mathbb{S}(p_i, p_k) = \left\{ p_t \mid p_t \in \mathbb{C} \wedge p_t \neq p_k \wedge R\big(\sphericalangle(p_k - p_i, \vec{x})\big) = R\big(\sphericalangle(p_t - p_i, \vec{x})\big) \right\}$$

in which $\mathbb{C}$ is the set of all tensors along obstacle surfaces, $\vec{x}$ is the unit vector along the x-axis in the map coordinate system, $\sphericalangle(\vec{a}, \vec{b}): \mathbb{R}^2 \times \mathbb{R}^2 \to [0,360]$ is the angle between two vectors from 0 to 360 degrees, $R(x)$ is a rounding function which rounds the input angle to a lower precision level (e.g. round to nearest 10) and defines the spatial extent of a spatial precision unit.

At block 1124, the sampled tensors in the tensor list L are combined using the cost function $W(p_i, p_j)$ described earlier, resulting in determination of the combined navigation tensor at block 1126. The method 1100 may loop back to block 1114, for navigation on the fly. Blocks 1102 to 1112 may also be repeated, for SLAM on the fly.

Referring to the calculation of $R(x)$, the spatial precision units can have fixed spatial extents (i.e. =10) as shown below:

$$R(x) = 10 \left\lfloor \frac{x}{10} + \frac{1}{2} \right\rfloor$$

Alternatively, if the spatial precision units have non-uniform spatial extents as described earlier, the rounding precision of $R$ can vary according to distances of surfaces from the device 500, and/or surface complexity of surfaces. Mathematically, a rounding precision of $R$ that varies according to the distance between the location of the device 500 $p_i$ and candidate points on the surface $p_t$ could be defined as:

$$R\big(\sphericalangle(p_t - p_i, \vec{x})\big) = \left\lceil \frac{\|p_t - p_i\|}{k} \right\rceil \left\lfloor \frac{\sphericalangle(p_t - p_i, \vec{x})}{\left\lceil \frac{\|p_t - p_i\|}{k} \right\rceil} + \frac{1}{2} \right\rfloor$$

where $k$ depends on the tensor sample density, and may be a constant or may vary for different spatial precision units. This adaptive configuration can increase tensor sample density along obstacle surfaces which are closer to the device 500, further improving the accuracy of scene reconstruction and adapting to different scales of sag structures. FIG 6 as described earlier is an example of a simulation performed using the above method 1100.

The apparatus, methods and computer programs may use machine learning which can include statistical learning. Machine learning is a field of computer science that gives computers the ability to learn without being explicitly programmed. The computer learns from experience E with respect to some class of tasks T and performance measure P if its performance at tasks in T, as measured by P, improves with experience E. For example, the determination of the navigation parameter as described herein may be further improved with machine learning. For example, reinforcement learning may be implemented by introducing a reward function for performing certain actions. The machine learning may learn the sum of the rewards for previous positions of the device 500, to adapt the reward function. The reward function may be configured to proportionally increase the reward when the device 500 remains close to the obstacle, compared to moving away from the obstacle. This reduces the likelihood that the device 500 will roam excessively far from obstacles. This provides a good compromise between sampling granularity which drops steeply with increasing distance from obstacles, and perspective problems and lens-focus problems which occur when too close to obstacles.

In some, but not necessarily all examples, the reward function may be implemented using a value function $V(p_i)$. The value function may increase the reward when the average distance of the device 500 (at $p_i$) from the sampled tensors in the set $\mathbb{M}(p_i)$ (== $p_j$ along the surface of the obstacle) decreases:

$$V(p_i) \propto \frac{1}{\sum_{p_j \in \mathbb{M}(p_i)} \|p_j - p_i\|}$$

FIG 9A illustrates an example of apparatus 910 implemented using a single controller 900. Implementation of a controller 900 may be as controller circuitry. The controller 900 may be implemented in hardware alone, have certain aspects in software including firmware alone or can be a combination of hardware and software (including firmware). In some examples, the apparatus 910 may be implemented using a plurality of controllers 900.

As illustrated in FIG 9A the controller 900 may be implemented using instructions that enable hardware functionality, for example, by using executable instructions of a computer program 906 in a general-purpose or special-purpose processor 902 that may be stored on a computer readable storage medium (disk, memory etc) to be executed by such a processor 902.

The processor 902 is configured to read from and write to the memory 904. The processor 902 may also comprise an output interface via which data and/or commands are output by the processor 902 and an input interface via which data and/or commands are input to the processor 902.

The memory 904 stores a computer program 906 comprising computer program instructions (computer program code) that controls the operation of the apparatus 910 when loaded into the processor 902. The computer program instructions, of the computer program 906, provide the logic and routines that enables the apparatus to perform the methods illustrated in FIG 1, FIG 3 and FIG 11. The processor 902 by reading the memory 904 is able to load and execute the computer program 906.

The apparatus 910 therefore comprises:

at least one processor 902; and
at least one memory 904 including computer program code
the at least one memory 904 and the computer program code configured to, with the at least one processor 902, cause the apparatus 910 at least to perform: receiving information indicative of an imaged scene imaged by at least one imaging device 200; reconstructing the scene using a spatially non-uniform sampling scheme for sampling the information, wherein the spatial non-uniformity of the sampling is controlled to bias sampling of non-sag structures in surfaces of the imaged scene; determining a navigation parameter of an at least partially autonomous navigation device 500 in dependence on the reconstructed scene; and providing the navigation parameter to control navigation of the device 500.

As illustrated in FIG 9B, the computer program 906 may arrive at the apparatus 910 via any suitable delivery mechanism 908. The delivery mechanism 908 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid state memory, an article of manufacture that comprises or tangibly embodies the computer program 906. The delivery mechanism may be a signal configured to reliably transfer the computer program 906. The apparatus 910 may propagate or transmit the computer program 906 as a computer data signal.

Computer program instructions for causing apparatus to perform at least the following or for performing at least the following: cause receiving information indicative of an imaged scene imaged by at least one imaging device 200; cause reconstructing the scene using a spatially non-uniform sampling scheme for sampling the information, wherein the spatial non-uniformity of the sampling is controlled to bias sampling of non-sag structures in surfaces of the imaged scene; cause determining a navigation parameter of an at least partially autonomous navigation device 500 in dependence on the reconstructed scene; and cause providing the navigation parameter to control navigation of the device 500.

The computer program instructions may be comprised in a computer program, a non-transitory computer readable medium, a computer program product, a machine readable medium. In some but not necessarily all examples, the computer program instructions may be distributed over more than one computer program.

Although the memory 904 is illustrated as a single component/circuitry it may be implemented as one or more separate components/circuitry some or all of which may be integrated/removable and/or may provide permanent/semi-permanent/ dynamic/cached storage.

Although the processor 902 is illustrated as a single component/circuitry it may be implemented as one or more separate components/circuitry some or all of which may be integrated/removable. The processor 902 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:

(a) hardware-only circuitry implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause apparatus, such as a mobile phone or server, to perform various functions and

(c) hardware circuit(s) and or processor(s), such as a microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

FIG 10 shows an example of the device. The device may be a ground vehicle. In other examples, the device may be an airborne vehicle or a marine vehicle. The device may comprise the apparatus as described herein, or the apparatus may be off-board and configured to communicate with the device via a communication link. The device may comprise the controller 900 as described herein, or the controller 900 may be off-board and configured to communicate with the device via a communication link. Alternatively, the apparatus 910 may comprise both on-board and off-board controllers 900. The device may comprise the at least one imaging device 200, or the imaging device(s) 200 may be off-board the device and configured to communication with the device via a communication link.

The blocks illustrated in the Figs 1, 3 and 11 may represent steps in a method and/or sections of code in the computer program 906. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

The imaging of a scene may comprise only temporary recording, or it may comprise permanent recording or it may comprise both temporary recording and permanent recording, Temporary recording implies the recording of data temporarily. This may, for example, occur during sensing or image capture, occur at a dynamic memory, occur at a buffer such as a circular buffer, a register, a cache or similar. Permanent recording implies that the data is in the form of an addressable data structure that is retrievable from an addressable memory space and can therefore be stored and retrieved until deleted or over-written, although long-term storage may or may not occur. The use of the term 'capture' in relation to an image relates to temporary recording of the data of the image. The use of the term 'store' in relation to an image relates to permanent recording of the data of the image.

The algorithms hereinbefore described may be applied to achieve the following technical effects: improved autonomous navigation accuracy without the need to substantially increase computational load. Minimal computational load is highly desirable for navigation on the fly, in unfamiliar environments. For a tensor field-based navigation method, the improved navigation accuracy comprises a reduced attraction to sag structures, and a reduced tendency to remain close to obstacle surfaces, wherein both tendencies are shortcomings of other tensor field-based navigation methods.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although embodiments have been described in the preceding paragraphs with reference to various examples, it should be appreciated that modifications to the examples given can be made without departing from the scope of the claims. For example, the navigation approach may be another type than tensor field-based navigation, such as vector field-based navigation. Further, instead of examining the distances of surfaces from the device, the surface could be analysed using a feature detection algorithm, for detecting sag structures.

Features described in the preceding description may be used in combinations other than the combinations explicitly described above.

Although functions have been described with reference to certain features, those functions may be performable by other features whether described or not.

Although features have been described with reference to certain embodiments, those features may also be present in other embodiments whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer and exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

**Claims**

1. Apparatus comprising means for:

   receiving information indicative of an imaged scene imaged by at least one imaging device;
   reconstructing the scene using a spatially non-uniform sampling scheme for sampling the information, wherein the spatial non-uniformity of the sampling is controlled to bias sampling of non-sag structures in surfaces of the imaged scene;
   determining a navigation parameter of an at least partially autonomous navigation device in dependence on the reconstructed scene; and
   providing the navigation parameter to control navigation of the device.

2. Apparatus as claimed in claim 1, wherein the sampling is dependent on distances of surface locations from a reference location associated with the device.

3. Apparatus as claimed in claim 2, wherein the sampling is dependent on comparison of relative distances of different surface locations from the reference location.

4. Apparatus as claimed in claim 2 or 3, wherein the bias samples surface locations closer to the reference location than other surface locations.

5. Apparatus as claimed in any preceding claim, wherein the sampling is dependent on distances of surface locations within a spatial precision unit.

6. Apparatus as claimed in claim 5, wherein the sampling is dependent on comparison of distances of different surface locations, within the spatial precision unit.

7. Apparatus as claimed in claim 5 or 6, wherein the sampling is repeated for a plurality of spatial precision units.

8. Apparatus as claimed in claim 7, wherein spatial precision units have precisions defined as spatial extents, and wherein the spatial extents of the spatial precision units are non-uniform.

9. Apparatus as claimed in claim 8, wherein the spatial extents of spatial precision units are determined in dependence on at least one of:

distances of surfaces from the device; or
surface complexity of surfaces.

10. Apparatus as claimed in any preceding claim, wherein the navigation parameter comprises direction.

11. Apparatus as claimed in any preceding claim, wherein the sampling scheme is configured to determine which locations along the surfaces are to be assigned a tensor in a tensor field.

12. Apparatus as claimed in any preceding claim, wherein the navigation parameter is determined in dependence on a cost function configured to reduce the weighting of distant sampled surface locations from the device, on the determination of the navigation parameter, and/or wherein the navigation parameter is determined in dependence on a reward function configured to increase a reward when the device is close to a surface.

13. A device configured for at least partially autonomous navigation, which is the at least partially autonomous navigation device of any preceding claim, and comprises the apparatus of any preceding claim.

14. A method comprising:

receiving information indicative of an imaged scene imaged by at least one imaging device;
reconstructing the scene using a spatially non-uniform sampling scheme for sampling the information, wherein the spatial non-uniformity of the sampling is controlled to bias sampling of non-sag structures in surfaces of the imaged scene;
determining a navigation parameter of an at least partially autonomous navigation device in dependence on the reconstructed scene; and
providing the navigation parameter to control navigation of the device.

15. A computer program comprising instructions that when run on a processor enables the processor to:

cause receiving information indicative of an imaged scene imaged by at least one imaging device;
cause reconstructing the scene using a spatially non-uniform sampling scheme for sampling the information, wherein the spatial non-uniformity of the sampling is controlled to bias sampling of non-sag structures in surfaces of the imaged scene;
cause determining a navigation parameter of an at least partially autonomous navigation device in dependence on the reconstructed scene; and
cause providing the navigation parameter to control navigation of the device.

*100*

Receive
information ~110

Reconstruct
scene ~120

Determine
navigation
parameter ~130

Control device
navigation ~140

## FIG. 1

*206*

~200

*202*

~204

## FIG. 2

~120

122~ Determine
precision unit
(PU)

124~ Spatially
sample

Next PU ~128

126~ No more PUs? N

Y

End

## FIG. 3

Scene

$\square$ ~200

402

*406*

*404*

**FIG. 4A**

Imaged
scene

200

Field
of view

~412

**FIG. 4B**

Sampled
scene

422~●

422~●

422

422

**FIG. 4C**

Reconstructed
scene

422~●

422~●

~424

422

~422

**FIG. 4D**

EP 3 702 809 A1

FIG. 5A

FIG. 5B

FIG. 6

FIG. 7A

FIG. 7B

FIG. 8A

FIG. 8B

910

900

902

Processor

904

Memory

906

FIG. 9A

908

906

FIG. 9B

200

900

500

FIG. 10

FIG. 11

Europäisches
Patentamt

European
Patent Office

Office européen
des brevets

## EUROPEAN SEARCH REPORT

Application Number

EP 19 15 9768

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/143322 A1 (ROSENZWEIG OREN [IL] ET AL) 24 May 2018 (2018-05-24) <br> * paragraphs [0182] - [0198], [0358] - [0383] * <br> * figures 5, 22 * <br> ----- | 1-15 | INV. <br> G01S17/89 <br> G01S17/93 <br> G01S7/48 |
| A | GB 2 562 037 A (NOKIA TECHNOLOGIES OY [FI]) 7 November 2018 (2018-11-07) <br> * pages 1-17 * <br> * figures 1-10 * <br> ----- | 1-15 | |
| A | US 9 958 379 B1 (ZHU JIAJUN [US] ET AL) 1 May 2018 (2018-05-01) <br> * column 4, line 25 - column 24, line 39 * <br> * figures 1-8 * <br> ----- | 1-15 | |

**TECHNICAL FIELDS
SEARCHED      (IPC)**

G01S

The present search report has been drawn up for all claims

| Place of search | Date of completion of the search | Examiner |
|---|---|---|
| Munich | 23 September 2019 | Kruck, Peter |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 15 9768

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2019

| Patent document cited in search report | | | Publication date | Patent family member(s) | | | Publication date |
|---|---|---|---|---|---|---|---|
| US 2018143322 | A1 | | 24-05-2018 | CN | 109997057 | A | 09-07-2019 |
| | | | | EP | 3516421 | A2 | 31-07-2019 |
| | | | | KR | 20190049871 | A | 09-05-2019 |
| | | | | US | 2018113200 | A1 | 26-04-2018 |
| | | | | US | 2018120424 | A1 | 03-05-2018 |
| | | | | US | 2018120441 | A1 | 03-05-2018 |
| | | | | US | 2018128920 | A1 | 10-05-2018 |
| | | | | US | 2018136331 | A1 | 17-05-2018 |
| | | | | US | 2018136337 | A1 | 17-05-2018 |
| | | | | US | 2018143302 | A1 | 24-05-2018 |
| | | | | US | 2018143304 | A1 | 24-05-2018 |
| | | | | US | 2018143305 | A1 | 24-05-2018 |
| | | | | US | 2018143306 | A1 | 24-05-2018 |
| | | | | US | 2018143307 | A1 | 24-05-2018 |
| | | | | US | 2018143308 | A1 | 24-05-2018 |
| | | | | US | 2018143322 | A1 | 24-05-2018 |
| | | | | US | 2018143324 | A1 | 24-05-2018 |
| | | | | US | 2019212450 | A1 | 11-07-2019 |
| | | | | US | 2019271769 | A1 | 05-09-2019 |
| | | | | WO | 2018055449 | A2 | 29-03-2018 |
| GB 2562037 | A | | 07-11-2018 | NONE | | | |
| US 9958379 | B1 | | 01-05-2018 | US | 9234618 | B1 | 12-01-2016 |
| | | | | US | 9958379 | B1 | 01-05-2018 |

EPO FORM P0459

For more details about this annex : see Official Journal of the European Patent Office, No. 12/82